(19) Europäisches Patentamt
European Patent Office
Office européen des brevets

(11) **EP 4 102 523 A1**

(12) **EUROPEAN PATENT APPLICATION**

(43) Date of publication:
**14.12.2022 Bulletin 2022/50**

(21) Application number: **21178319.6**

(22) Date of filing: **08.06.2021**

(51) International Patent Classification (IPC):
**H01F 29/14** (2006.01)   **H01F 27/38** (2006.01)
**H01F 38/08** (2006.01)   **H02M 3/335** (2006.01)

(52) Cooperative Patent Classification (CPC):
**H01F 27/38; H01F 29/146; H02M 1/0064;**
**H02M 3/003;** H01F 38/08; H01F 2029/143;
H02M 3/33573; H02M 3/33584

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Katholieke Universiteit Leuven, KU**
**Leuven R&D**
**3000 Leuven (BE)**

(72) Inventors:
• **MARTINEZ, Wilmar**
**3500 Hasselt (BE)**
• **SUAREZ BUITRAGO, Camilo**
**3500 Hasselt (BE)**

(54) **VARIABLE TRANSFORMER**

(57) A variable transformer is disclosed. The variable transformer comprises a first core having first and second legs, a second core having first and second legs, and an auxiliary core, wherein the second leg of the first core coincides with the first leg of the second core, wherein a set of primary windings is provided on the first leg of the first core, a first set of secondary windings is provided on the first leg of the second core, and a second set of secondary windings is provided on the second leg of the second core; wherein the auxiliary core is disposed between the first and second legs of the second core and parallel to the first and second legs of the second core, wherein the auxiliary core comprises a virtual air gap provided by a set of auxiliary windings around the auxiliary core.

Fig. 1a

Processed by Luminess, 75001 PARIS (FR)

**Description**

**TECHNICAL FIELD**

The invention relates to transformers, particularly transformers which can be used as part of a Dual Active Bridge.

**BACKGROUND**

The power electronics industry uses controlled magnetics, like variable inductors, in many applications, for example reactive power compensation, optimization of universal ballasts, Maximum Power Point Tracking for PV Systems, reduction of the inrush current in single-phase transformers, efficiency improvement of wide-voltage isolated power converters.

The variation of a magnetic device can be achieved by controlling its magnetic core saturation to realize the desired magnetic reluctance value. One way to obtain this procedure is to employ control windings to set a DC magnetic flux bias.

The superposed DC magnetic flux bias can be parallel, orthogonal, or mixed, where a core section is drilled to introduce the control windings. This generates a local saturated region having a similar behaviour to an air gap. Thus, it is referred to as virtual air gap (VAG). An increase in the control current generates a higher reluctance at the intervened core section, in other words, an equivalent bigger air gap.

This approach is employed in D. S. L. Dolan and P. W. Lehn, "Finite element analysis of a Virtual Air Gap Variable Transformer," 2008 Canadian Conference on Electrical and Computer Engineering, Niagara Falls, ON, 2008, pp. 000891-000896, to implement two different variable transformers (VT) capable of delivering theoretically an output of +/-100% and 75% to 125% of the input voltage, respectively. Such a device could significantly improve the efficiency of isolated power converters like the Dual Active Bridge (DAB) working over wide-voltage conditions.

This technique affects the leakage and magnetizing inductances of the transformer. There is a need for transformer topologies with decreased leakage inductance. There is also a need for transformer topologies with increased magnetizing inductance and controllable input-output voltage ratio.

**SUMMARY**

According to a first aspect of the present invention there is provided a variable transformer comprising a first core having first and second legs, a second core having first and second legs, and an auxiliary core, wherein the second leg of the first core coincides with the first leg of the second core, wherein a set of primary windings is provided on the first leg of the first core, a first set of secondary windings is provided on the first leg of the second core, and a second set of secondary windings is provided on the second leg of the second core; wherein the auxiliary core is disposed between the first and second legs of the second core and parallel to the first and second legs of the second core, wherein the auxiliary core comprises a virtual air gap provided by a set of auxiliary windings around the auxiliary core.

According to a second aspect of the present invention there is provided a variable transformer comprising a first core having first and second legs and a second core having first and second legs, wherein the second leg of the first core coincides with the first leg of the second core, wherein a set of primary windings is provided on the second leg of the first core, a first set of secondary windings is provided on the second leg of the first core, and a second set of secondary windings is provided on the second leg of the second core, the primary windings being electrically connected to the second set of secondary windings, wherein the first core comprises a virtual air gap provided on a virtual air gap portion of the first core other than the first or second leg, wherein the virtual air gap is provided by a set of virtual air gap windings around the virtual air gap portion.

According to a third aspect of the present invention there is provided a dual active bridge comprising a transformer according to the first aspect or the second aspect.

It is an advantage of embodiments of the present invention that a variable transformer with decreased leakage inductance can be provided. It is an advantage of embodiments of the present invention that a variable transformer with increased magnetizing inductance and controllable input-output voltage ratio can be provided.

**BRIEF DESCRIPTION OF THE DRAWINGS**

Certain embodiments of the present invention will now be described, by way of example, with reference to the accompanying drawings, in which:

Figure 1a is a schematic diagram of a first transformer according to embodiments of the present invention;

Figure 1b shows an implementation of a virtual air gap which may be incorporated in a transformer according to embodiments of the present invention;

Figure 2 is a schematic diagram of a second transformer according to embodiments of the present invention;

Figure 3a shows a magnetic circuit model of the first transformer according to embodiments of the present invention, which is also applicable to the second transformer;

Figure 3b shows an electric circuit model of the first transformer according to embodiments of the present invention, which is also applicable to the second transformer

Figure 4a is a schematic diagram of a third transformer according to embodiments of the present invention;

Figure 4b shows a magnetic circuit model of the third transformer;

Figure 4c shows an electric circuit model of the third transformer;

Figure 5 is a schematic diagram of a fourth transformer according to embodiments of the present invention;

Figure 6 shows an electrical model for a two windings transformer;

Figure 7 shows an electrical model for a transformer including a leakage inductance and a magnetising inductance;

Figure 8a is a plot of the leakage-magnetizing ratio Llk/ Lmag and the equivalent turns ratio neq for the first transformer;

Figure 8b is a plot of the leakage-magnetizing ratio Llk/ Lmag and the equivalent turns ratio neq for the third transformer;

Figure 9 shows a magnetic and equivalent electric model of the first transformer in the PLECS simulation software;

Figure 10 shows a magnetic and equivalent electric model of the fourth transformer in the PLECS simulation software;

Figure 11a is a plot of the equivalent leakage, magnetizing inductances and turns ratio for the fourth transformer 40 as a function of the variable reluctance divided by the norm R1;

Figure 11b is a plot of the leakage/magnetizing inductance ratio for the fourth transformer 40 as a function of the variable reluctance divided by the norm R1;

Figure 11c shows the input (V1) and output voltage (V2) of a Dual Active Bridge (DAB) converter simulated in PLECS, the converter comprising the fourth transformer;

Figure 11d shows the voltage variation at the secondary transformer's voltage reflected to the primary (Vrs) when the airgap effect is negligible, for the fourth transformer.

The drawings are only schematic and are non-limiting. In the drawings, the size of some of the elements may be exaggerated and not drawn to scale for illustrative purposes.
Any reference signs in the claims shall not be construed as limiting the scope.
In the different drawings, the same reference signs refer to the same or analogous elements.

## DETAILED DESCRIPTION OF EMBODIMENTS

The transformers according to embodiments of the present invention require a variable reluctance $R_v$ to modify the transformer's electrical characteristics, such as leakage inductance, magnetizing inductance, and/or input-output voltage ratio. Among other advantages, such transformers are useful for incorporation into a Dual Active Bridge because the soft switching region can be expanded under wide voltage operation including low power conditions. This allows the Dual Active Bridge to be used in a variety of power conditions. Additionally, keeping a matched voltage by means of a variable transformer decreases the transformer effective current and consequently the conduction losses are reduced.
The operation principle is based on creating an alternative flux path, employing a VAG at the transformer's core to modify its windings' flux rate and, consequently, the induced voltages at the secondary windings.

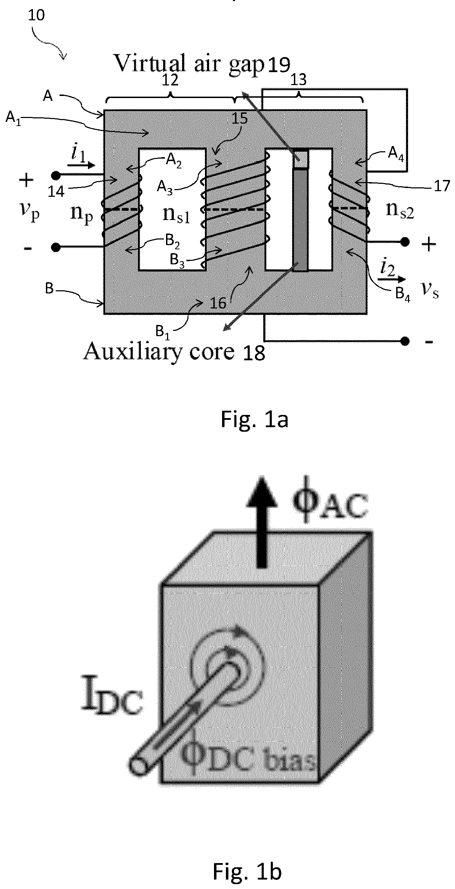

Referring to Figure 1, a first transformer 10 according to embodiments of the present invention has a primary core 12 and a secondary core 13. The primary core 12 has first and second core legs 14, 15 respectively. The secondary core 13 has first and second core legs 16, 17 respectively. The second leg 15 of the primary coil 12 is shared with the first leg 16 of the secondary core 13. The primary core 12 has $n_p$ primary core windings on the first leg14. The secondary core 13 has a first set $n_{s1}$ of secondary core windings around the second leg 15 of the primary coil 12 and the first leg 16 of the secondary core 13. The secondary core 13 has a second set $n_{s2}$ of secondary core windings around the second leg 17 of the secondary core 13. The first transformer 10 is composed of two E-shaped elements A and B, each having a main section $A_1$, $B_1$ respectively and three protrusions $A_{2,3,4}$, $B_{2,3,4}$ respectively, brought into contact at the end points of the protrusions of the E-shapes such that the end points of $A_2$ and $B_2$ are in contact and similarly for $A_{3,4}$ and $B_{3,4}$. The first leg 14 of the primary core 12 is formed by $A_2$ and $B_2$. The second leg 15 of the primary core 12, being the same as the first leg 16 of the secondary core 13, is formed by $A_3$ and $B_3$. The second leg 16 of the secondary core 13 is formed by $A_4$ and $B_4$.

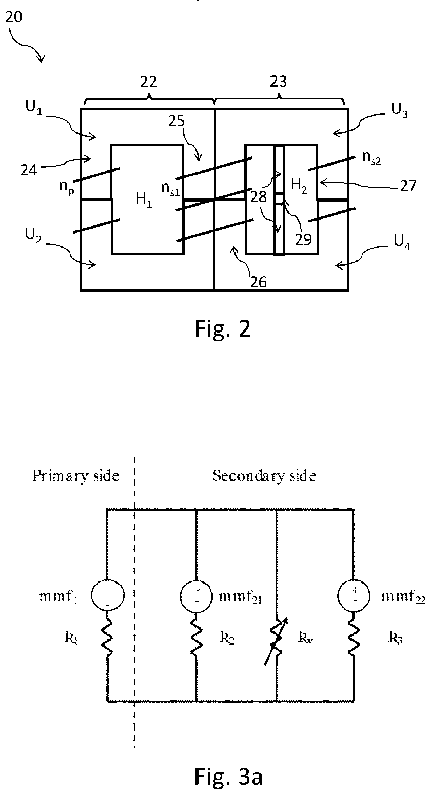

The first transformer 10 comprises an auxiliary core 18 located between the first and second legs 16, 17 of the secondary core1 3. A portion of the auxiliary core 18 is drilled to introduce control windings (see Figure 1a), providing a virtual air gap 19 located at an end of the auxiliary core 18. In some embodiments, the virtual air gap 19 may be located at a point between ends of the auxiliary core 18 as in Figure 2.

Referring to Figure 2, a second transformer 20 according to embodiments of the present invention has a primary core 22 and a secondary core 23. The primary core 22 has first and second core legs 24, 25 respectively. The secondary core 23 has first and second core legs 26, 27 respectively. The second leg 25 of the primary coil 22 is shared with the first leg 26 of the secondary core 23. The primary core 22 has $n_p$ primary core windings on the first leg 24. The secondary core 23 has a first set $n_{s1}$ of secondary core windings around the second leg 25 of the primary coil 22 and the first leg 26 of the secondary core 23. The secondary core 23 has a second set $n_{s2}$ of secondary core windings around the second leg 27 of the secondary core 23. The second transformer 20 is formed by four U-shaped elements, $U_{1,2,3,4}$ respectively. $U_1$ and $U_2$ are disposed opposite each other so as to form a rectangular shape $U_{12}$ with a hole $H_1$ in the middle, the rectangular shape $U_{12}$ being the primary core 22. Similarly $U_3$ and $U_3$ are disposed opposite each other so as to form a rectangular shape $U_{34}$ with a hole $H_2$ in the middle, the rectangular shape $U_{34}$ being the secondary core 23. The primary core 22 and the secondary core 23 are disposed adjacent to each other such that $U_1$ and $U_3$ are adjacent, and $U_2$ and $U_4$ are adjacent.

The second transformer 20 comprises an auxiliary core 28 located between the first and second legs 26, 27 of the secondary core 23. A portion of the auxiliary core 28 is drilled to introduce control windings (see Figure 1a), providing a virtual air gap 29 located at a midpoint of the auxiliary core 28. In some embodiments, the virtual air gap 19 may be located at an end of the auxiliary core 28 as in Figure 1a.

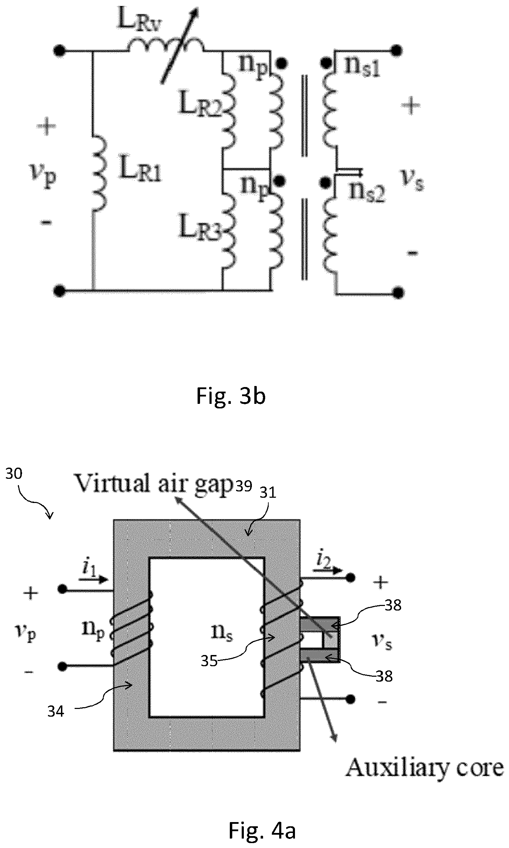

The first transformer 10 and the second transformer 20 have the same magnetic circuit model, shown in Figure 3a, and the same electric model, shown in Figure 3b.

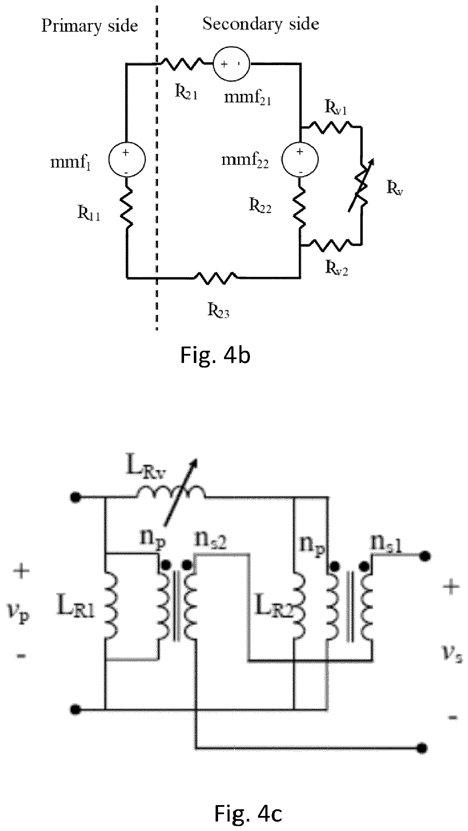

A third transformer 30 according to embodiments of the present invention is shown in Figure 4a, along with its magnetic circuit model in Figure 4b and electric model in Figure 4c. The third transformer 30 has a single core 31 with $n_p$ primary windings on a first leg 34 of the core 31 and $n_s$ secondary windings on a second leg 35 of the core 31. The third transformer 30 comprises an auxiliary core 38 forming a U-shape and being attached to the second leg 33. A portion of the auxiliary core 38 is drilled to introduce control windings (see Figure 1a), providing a virtual air gap 39 in the auxiliary core 38, the virtual air gap 39 being spaced apart from the second leg 33.

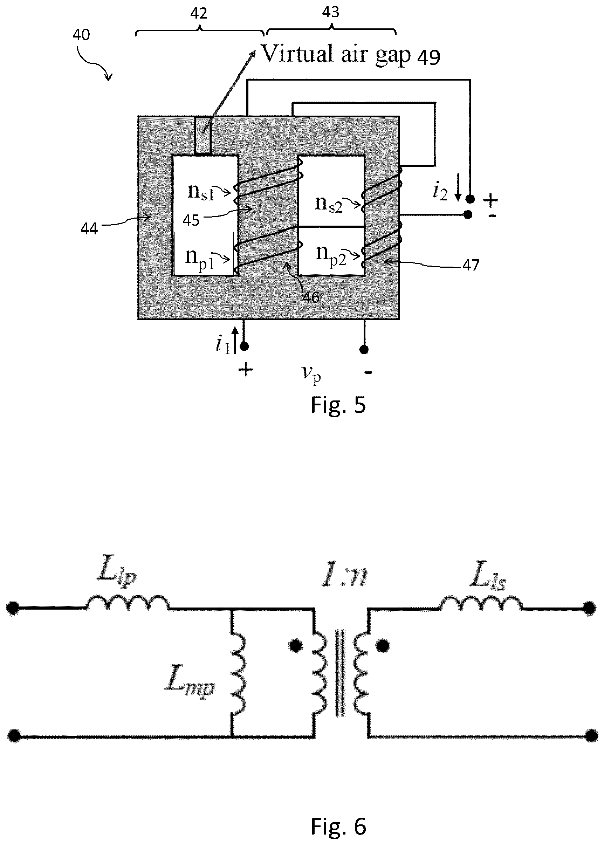

A fourth transformer 40 according to embodiments of the present invention is shown in Figure 5. The fourth transformer 40 has a primary core 42 and a secondary core 43. The primary core 42 has first and second core legs 44, 45 respectively. The secondary core 43 has first and second core legs 46, 47 respectively. The second leg 45 of the primary coil 42 is shared with the first leg 46 of the secondary core 43. The secondary core 43 has a first set $n_{s1}$ of secondary core windings around the second leg 45 of the primary coil 42 and the first leg 46 of the secondary core 43. The secondary core 43 has a second set $n_{s2}$ of secondary core windings around the second leg 47 of the secondary core 43. The fourth transformer 40 may be formed of two E-shaped elements as described hereinbefore with reference to Figure 1a, or may be formed of four U-shaped elements as described hereinbefore with reference to Figure 2.

The fourth transformer 40 has a first set $n_{p1}$ of primary windings around the second leg 45 and the first leg 46, a second set $n_{p2}$ of primary windings around the second leg 47 of the secondary core 43, a first set $n_{s1}$ of secondary windings around the second leg 45 of the primary core 42 and the first leg 46 of the secondary core 43, and a second set $n_{s2}$ of secondary windings around the second leg 47 of the secondary core 43. The first set $n_{p1}$ of primary windings are connected to the second set $n_{p2}$ of primary windings.

The fourth transformer 40 comprises a virtual air gap 49 in the primary core 42. The virtual air gap 49 is in a section of the core 42 around which there are no windings.

In the electric circuits, every magnetomotive source in the magnetic circuit is represented by an ideal transformer in the electric circuit, and every reluctance by an inductor, given by equation 1:

$$L_{Ri} = \frac{n_p^2}{R_i} \quad (1)$$

Although the obtained electric circuits are the dual representation of the magnetic models, it is not straightforward to compare the different transformer configurations' behaviour. As a consequence, a simplified transformer representation common to all topologies is needed.

The first, second, and fourth transformers 10, 20, 40 described hereinbefore have three windings, one primary and two secondaries connected in series. The secondary winding of the third transformer 30 can be interpreted as the set of turns that are intervened by the auxiliary core plus the set of turns that are not. Therefore, a two winding transformer equivalent can be derived, simplifying the characterization task.

The conventional approach requires only open-circuit (Lp) and short-circuit (Lp(ss)) inductances to compute the parameters in the two windings transformer electrical model shown in Figure 6. However, as explained in J. G. Hayes, N. O'Donovan, M. G. Egan and T. O'Donnell, "Inductance characterization of high-leakage transformers," Eighteenth Annual IEEE Applied Power Electronics Conference and Exposition, 2003. APEC '03., Miami Beach, FL, USA, 2003, pp. 1150-1156 vol.2, for high leakage transformers, the magnetizing inductance (Lmp) is also required for an accurate representation.

Lp, Lpss and Lmp for the first, second, and third transformers are obtained following the procedure in Hayes et al., and the results are summarized as follows. As can be seen, the variable reluctance $R_v$ affects all the obtained inductances, which indicates that a change in the transformer's voltage ratio employing a VAG implies a trade-off between leakage and magnetizing inductances.

$L_p$, primary open circuit inductance

First transformer 10:

$$\frac{L_{R1}(L_{R2} + L_{R3} + L_{Rv})}{L_{R1} + L_{R2} + L_{R3} + L_{Rv}}$$

Third transformer 30:

$$\frac{(L_{R2} + L_{Rv})L_{R1}}{(L_{R2} + L_{Rv}) + L_{R1}}$$

Fourth transformer 40:

$$\frac{L_{R1}L_{R2}n_{p1}^2 + L_{R1}L_{R2}n_{p2}^2 + L_{R1}L_{Rv}n_{p1}^2 + L_{R2}L_{Rv}n_{p2}^2 - 2L_{R1}L_{R2}n_{p1}n_{p2}}{n_{p1}^2(L_{R1} + L_{R2} + L_{Rv})}$$

$L_{mp}$, primary magnetising inductance:

First transformer 10:

$$\frac{L_p(L_{R2}n_{s1} + L_{R3}n_{s2})}{n(L_{Rv} + L_{R2} + L_{R3})(n_p)}$$

Third transformer 30:

$$\frac{L_p}{n}\left(\frac{n_{s2}}{n_p} + \frac{n_{s1}L_{R2}}{n_p(L_{R2} + L_{Rv})}\right)$$

Fourth transformer 40:

$$L_{mplll}$$

$L_{p(ss)}$, primary short circuit inductance:

First transformer 10:

$$\frac{L_{R1}(L_{R1}L_{R2} - L_{R3}^2 m^2 + L_{R2}L_{Rv} - 2L_{R2}L_{R3}m + L_{R1}L_{R3}m^2 + L_{R2}L_{R3}m^2 + L_{R3}L_{Rv}m^2)}{2L_{R1}L_{R2} - L_{R3}^2 m^2 + L_{R2}L_{Rv} - 2L_{R2}L_{R3}m + 2L_{R1}L_{R3}m^2 + L_{R2}L_{R3}m^2 + L_{R3}L_{Rv}m^2}$$

Third transformer 30:

$$\frac{L_{R1}L_{R2}L_{Rv}}{L_{R1}L_{R2} + L_{R2}L_{Rv} + 2L_{R1}L_{R2}m + L_{R1}L_{R2}m^2 + L_{R1}L_{Rv}m^2}$$

Fourth transformer 40:

$$\frac{L_{R1}L_{R2}L_{Rv}\left(n_{p1}n_{s2} + n_{p2}n_{s1}\right)^2}{n_{p1}\left(L_{R1}L_{R2}n_{p1}n_{s1}^2 + L_{R1}L_{R2}n_{p1}n_{s2}^2 + L_{R1}L_{Rv}n_{p1}n_{s1}^2 + L_{R2}L_{Rv}n_{p1}n_{s2}^2 + 2L_{R1}L_{R2}n_{p1}n_{s1}n_{s2}\right)}$$

Where $m = \frac{n_{s2}}{n_{s1}}$ and

$L_{mpIII}$

$$
= \left[ L_{R1}n_{s1}\left( \frac{\dfrac{n_{p1}^2(L_{R1} + L_{R2} + L_{Rv})}{(L_{R1}L_{R2}n_{p1}^2 + L_{R1}L_{R2}n_{p2}^2 + L_{R1}L_{Rv}n_{p1}^2 + L_{R2}L_{Rv}n_{p2}^2 - 2L_{R1}L_{R2}n_{p1}n_{p2})}{n_{p1}\left(n_{p1}^2(n_{s1} + n_{s2})(L_{R1} + L_{R2} + L_{Rv})\right)} \right.
$$

$$
\left. - \frac{\dfrac{n_{p1}(L_{R1}n_{p1} + L_{R2}n_{p2})}{(L_{R1}L_{R2}n_{p1}^2 + L_{R1}L_{R2}n_{p2}^2 + L_{R1}L_{Rv}n_{p1}^2 + L_{R2}L_{Rv}n_{p2}^2 - 2L_{R1}L_{R2}n_{p1}n_{p2})}{n_{p1}\left(n_{p1}^2(n_{s1} + n_{s2})(L_{R1} + L_{R2} + L_{Rv})\right)} \right)
$$

$$
- L_{R2}n_{p2}n_{s2}\left( \frac{\dfrac{n_{p1}^2(L_{R1} + L_{R2} + L_{Rv})}{(L_{R1}L_{R2}n_{p1}^2 + L_{R1}L_{R2}n_{p2}^2 + L_{R1}L_{Rv}n_{p1}^2 + L_{R2}L_{Rv}n_{p2}^2 - 2L_{R1}L_{R2}n_{p1}n_{p2})}{n_{p1}^2\left(n_{p1}^2(n_{s1} + n_{s2})(L_{R1} + L_{R2} + L_{Rv})\right)} \right.
$$

$$
\left. \left. - \frac{\dfrac{n_{p1}^2(L_{R1}n_{p1} + L_{R2}n_{p2})}{n_{p2}(L_{R1}L_{R2}n_{p1}^2 + L_{R1}L_{R2}n_{p2}^2 + L_{R1}L_{Rv}n_{p1}^2 + L_{R2}L_{Rv}n_{p2}^2 - 2L_{R1}L_{R2}n_{p1}n_{p2})}{n_{p1}^2\left(n_{p1}^2(n_{s1} + n_{s2})(L_{R1} + L_{R2} + L_{Rv})\right)} \right) \right](n_{p1} + n_{p2})
$$

Equations 2 to 4 determine the primary leakage inductance Llp and secondary leakage inductance Lls, necessary to obtain all the simplified model parameters in Figure 6:

$$
L_{lp} = L_p - L_{mp} \tag{2}
$$

$$
L_{ls} = \frac{n^2 L_{mp}\left(L_{p(ss)} - L_{lp}\right)}{L_{mp} + L_{lp} - L_{p(ss)}} \tag{3}
$$

$$
n = \frac{n_{S1} + n_{S2}}{n_p} \tag{4}
$$

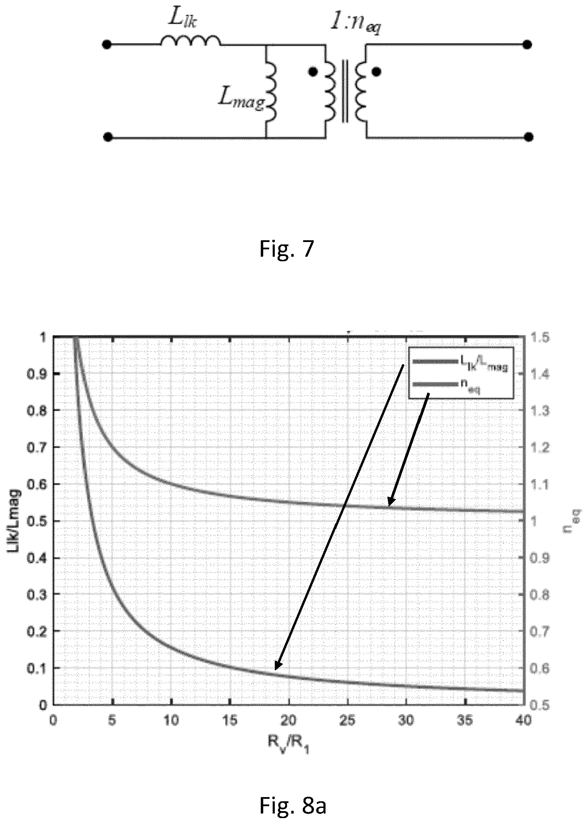

This model might derive negative values for the secondary leakage inductance Lls, making it difficult to get an insight into the circuit's behaviour. To avoid negative inductances, primary and secondary leakage inductances can be grouped to obtain only positive values. For this purpose, the procedure in X. Margueron and J. Keradec, "Design of Equivalent Circuits and Characterization Strategy for n-Input Coupled Inductors," in IEEE Transactions on Industry Applications, vol. 43, no. 1, pp. 14-22, Jan.-Feb. 2007 is used, making use of the simplified transformer model shown in Figure 7, wherein:

$$
L_{lk} = L_p(1 - k^2) \tag{5}
$$

$$
L_{mag} = L_p k^2 \tag{6}
$$

$$
n_{eq} = \frac{n L_{mp}}{k^2 L_p} \tag{7}
$$

$$k = \sqrt{1 - \frac{L_{p(ss)}}{L_p}} \qquad (8)$$

This circuit representation is more convenient for comparison purposes. It establishes one leakage inductance, one magnetizing inductance, and an equivalent turns ratio for each topology, all of them dependent on the variable reluctance $R_v$.

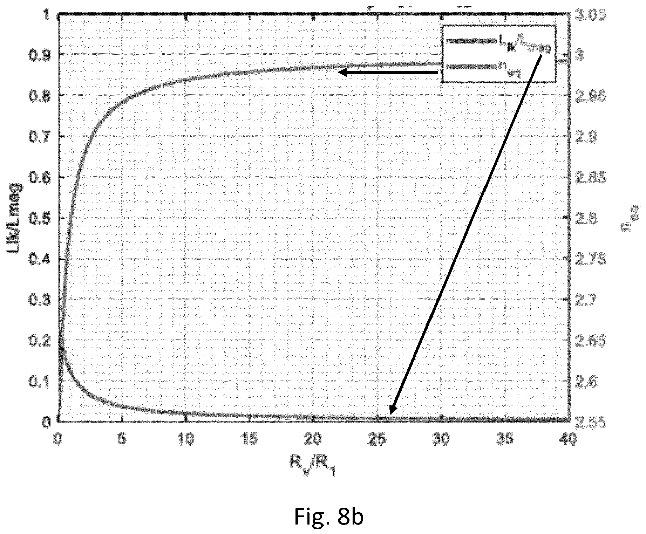

Figure 8a shows the leakage-magnetizing ratio Llk/ Lmag and the equivalent turns ratio neq for the first transformer 10. Figure 8b shows the leakage-magnetizing ratio Llk/ Lmag and the equivalent turns ratio neq for the third transformer 30. To simplify the comparison, the reluctances $R_{1-3}$ are equal, $R_1$ is the norm, and the control parameter $R_v$ is variated from $0.1R_1$ to $40R_1$.

It can be seen that changes in the turn ratio imply an increase in the transformer leakage inductance. This trade-off might limit the VT's application when used in wide voltage converters like the DAB, where its output power is inversely proportional to the transformer leakage inductance. Nevertheless, many parameters (np, ns1, ns2, $R_1 R_2$) can be adjusted to obtain better Llk/ Lmag ratios.

Depending on the application, the required span for neq and Llk/ Lmag are different, and different parameter configurations are needed. For this, an optimization process can be easily implemented considering the obtained expressions in Table I.

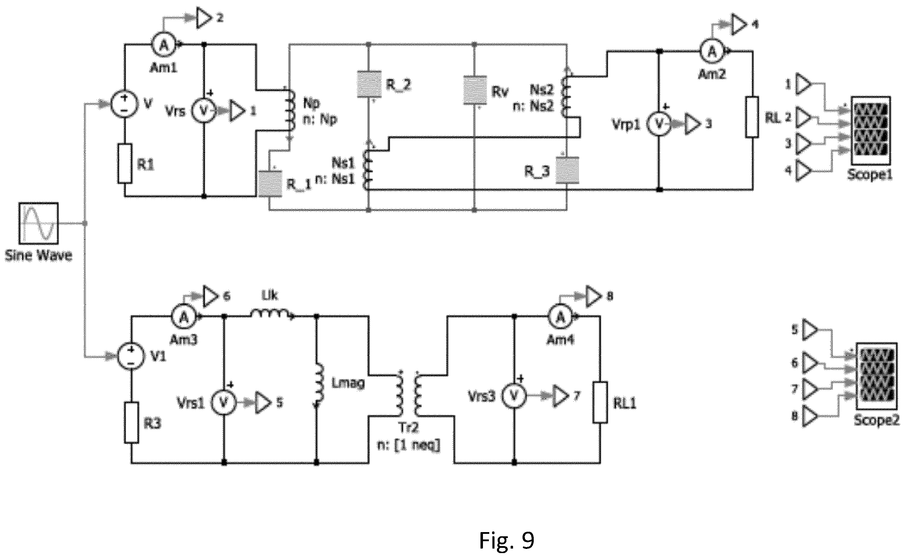

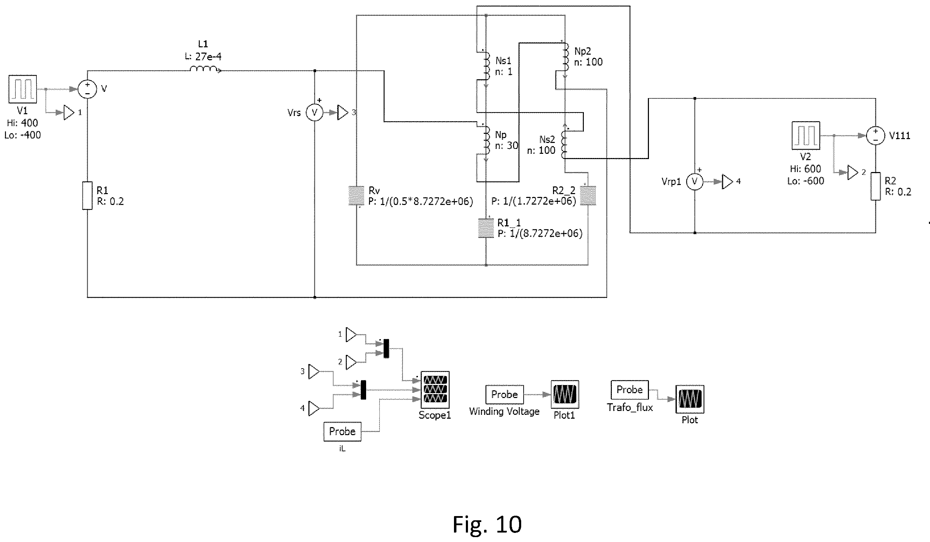

Simulations in the PLECS software (Plexim GmbH) were used to test the accuracy of the derived models. Figure 9 shows the first transformer 10 represented using a magnetic circuit and its equivalent simplified electric model. Figure 10 shows the same for the fourth transformer 40. A parameter sweep is done by means of a simulation script, modifying the reluctance $R_v$ in the magnetic circuit and the Llk, Lmag, and neq in the electric representation according to the derived expressions in this paper. Input and Output currents and voltages are measured and compared for every value of $R_v$, obtaining the same results for every iteration.

The same process was carried out for the second and third transformers with the same confirmation.

By choosing an appropriate ratio between np1/ns1, np1/ns2, R1/R2, the transformer turns ratio and the leakage/magnetizing inductance ratio can be maximized, which partly determines the maximum achievable power delivered by the DAB converter.

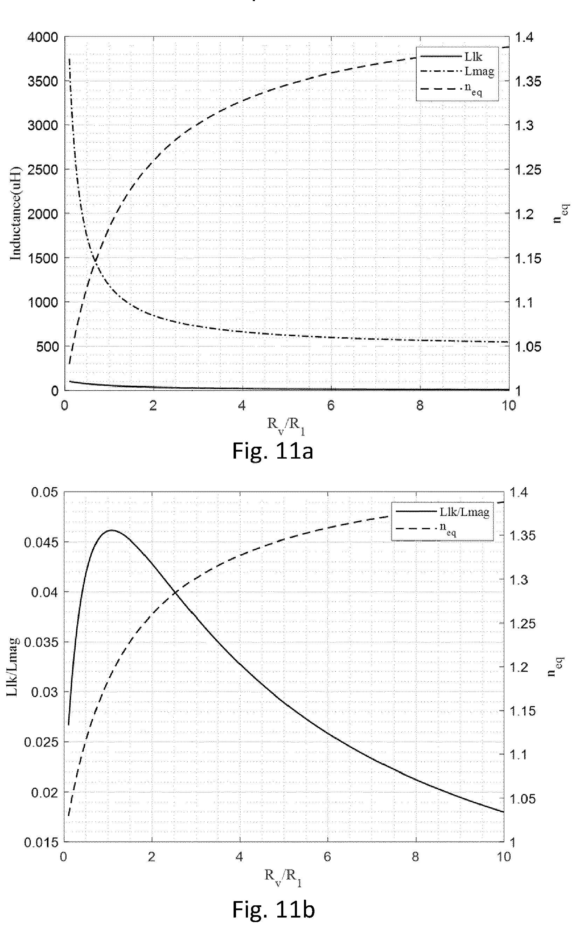

Figure 11a shows the equivalent leakage, magnetizing inductances and turns ratio for the fourth transformer 40. Figure 11b shows the leakage/magnetizing inductance ratio for the fourth transformer 40. As seen, this transformer allows to have an excellent leakage/magnetizing inductance and at the same time achieve an input-output voltage ratio variation close to +40 %.

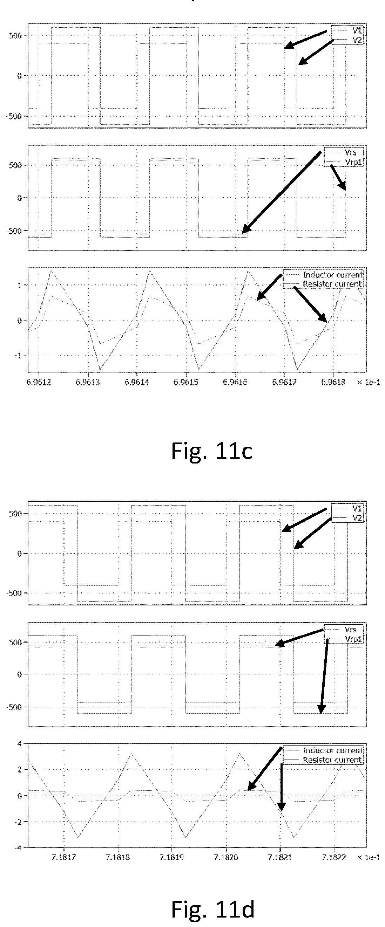

Figure 11c shows the input (V1) and output voltage (2) of a Dual Active Bridge (DAB) converter simulated in PLECS using the variable transformer shown in Fig 5. Vrs (secondary transformer voltage reflected to the primary) and Vrp1 (secondary voltage V2, Vrp1=V2) show the transformer's equivalent turns ratio is close to 1:1 as result of the variable transformer effect, showing in this way the effect of the virtual airgap. Primary and secondary transformer currents are shown in the bottom part of the figure.

Figure 11d shows the voltage variation at the secondary transformer's voltage reflected to the primary (Vrs) when the airgap effect is negligible, for the variable transformer shown in Figure 5. As seen when compared to Figure 11c, the equivalent transformer turns ration is close to 1:1.4, and as a consequence, there is change in the transformer current waveforms and power delivered by the DAB converter.

**Claims**

1. A variable transformer comprising a first core having first and second legs, a second core having first and second legs, and an auxiliary core, wherein the second leg of the first core coincides with the first leg of the second core, wherein a set of primary windings is provided on the first leg of the first core, a first set of secondary windings is provided on the first leg of the second core, and a second set of secondary windings is provided on the second leg of the second core; wherein the auxiliary core is disposed between the first and second legs of the second core and parallel to the first and second legs of the second core, wherein the auxiliary core comprises a virtual air gap provided by a set of auxiliary windings around the auxiliary core.

2. A variable transformer comprising a first core having first and second legs and a second core having first and second legs, wherein the second leg of the first core coincides with the first leg of the second core, wherein a set of primary windings is provided on the second leg of the first core, a first set of secondary windings is provided on the second leg of the first core, and a second set of secondary windings is provided on the second leg of the second core, the primary windings being electrically connected to the second set of secondary windings, wherein the first core comprises a virtual air gap provided on a virtual air gap portion of the first core other than the first or second leg, wherein the virtual air gap is provided by a set of virtual air gap windings around the virtual air gap portion.

3. A dual active bridge comprising a transformer according to claim 1 or claim 2.

Fig. 1a

Fig. 1b

20

22　　　　　　　23

$U_1$

25

$U_3$

24

$n_p$　　　　$n_{s1}$

$H_1$　　28

$H_2$

$n_{s2}$

27

$U_2$

29

$U_4$

26

Fig. 2

Primary side　　　　Secondary side

$mmf_1$　$+$　$-$

$R_1$

$mmf_{21}$　$+$　$-$

$R_2$　　$R_v$

$+$　$-$　$mmf_{22}$

$R_3$

Fig. 3a

Fig. 3b

Fig. 4a

Primary side ┊ Secondary side

Fig. 4b

Fig. 4c

Fig. 5

Fig. 6

Fig. 7

Fig. 8a

Fig. 8b

Fig. 9

Fig. 10

Fig. 11a

Fig. 11b

Fig. 11c

Fig. 11d

**EUROPEAN SEARCH REPORT**

Europäisches Patentamt
European Patent Office
Office européen des brevets

Application Number

EP 21 17 8319

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 132 821 A (ML ENG PLYMOUTH) 11 July 1984 (1984-07-11) * p. 1, l. 110 – p. 2, l. 48; figure 1 * | 1,3 | INV. H01F29/14 H01F27/38 |
| X | DE 34 23 160 A1 (BLUM GMBH & CO E [DE]) 24 January 1985 (1985-01-24) * p. 30, l. 9-20, p. 30, l. 25 – p. 31, l. 3 and p. 36, l. 11- p. 37, l. 17; figure 5 * | 1,3 | ADD. H01F38/08 H02M3/335 |
| X | DE 21 61 599 A1 (JOVANOVIC PAVLE) 8 March 1973 (1973-03-08) * p. 5, l. 9-27, p. 6, l. 25 – p. 7, l. 12 and p. 8, l. 21-33; figure 5 * | 2,3 | |
| A | SHIVA S M ET AL: "Tap changing transformer based dual active bridge bi-directional DC-DC converter", 2015 9TH INTERNATIONAL CONFERENCE ON POWER ELECTRONICS AND ECCE ASIA (ICPE-ECCE ASIA), KOREAN INSTITUTE OF POWER ELECTRONICS, 1 June 2015 (2015-06-01), pages 2025-2030, XP033184398, DOI: 10.1109/ICPE.2015.7168056 [retrieved on 2015-07-27] * abstract * | 3 | TECHNICAL FIELDS SEARCHED (IPC) H01F H02M |

-/--

The present search report has been drawn up for all claims

| Place of search | Date of completion of the search | Examiner |
|---|---|---|
| Munich | 3 December 2021 | Brächer, Thomas |

EPO FORM 1503 03.82 (P04C01)

page 1 of 2

Europäisches Patentamt

European Patent Office

Office européen des brevets

## EUROPEAN SEARCH REPORT

**Application Number**

**EP 21 17 8319**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PFEIFFER JONAS ET AL: "Review of Flux Interaction of Differently Aligned Magnetic Fields in Inductors and Transformers", IEEE ACCESS, IEEE, USA, vol. 9, 24 December 2020 (2020-12-24), pages 2357-2381, XP011829844, DOI: 10.1109/ACCESS.2020.3047156 [retrieved on 2021-01-05] * abstract, section 1. introduction and section 2. systematization * | 3 | |
| A,D | D. S. L. DOLANP. W. LEHN: "Finite element analysis of a Virtual Air Gap Variable Transformer", 2008 CANADIAN CONFERENCE ON ELECTRICAL AND COMPUTER ENGINEERING, NIAGARA FALLS, 2008, pages 000891-000896, XP002804944, * abstract and section 1. introduction * | 3 | |
| A | DE 298 13 324 U1 (TRAFOMODERN TRANSFORMATOREN GE [AT]) 22 October 1998 (1998-10-22) * the whole document * | 1 | TECHNICAL FIELDS SEARCHED (IPC) |

The present search report has been drawn up for all claims

| Place of search | Date of completion of the search | Examiner |
|---|---|---|
| Munich | 3 December 2021 | Brächer, Thomas |

EPO FORM 1503 03.82 (P04C01)

## ANNEX TO THE EUROPEAN SEARCH REPORT
## ON EUROPEAN PATENT APPLICATION NO.

EP 21 17 8319

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2021

| Patent document cited in search report | | Publication date | Patent family member(s) | | Publication date |
|---|---|---|---|---|---|
| GB 2132821 | A | 11-07-1984 | NONE | | |
| DE 3423160 | A1 | 24-01-1985 | CH | 668499 A5 | 30-12-1988 |
| | | | DE | 3423160 A1 | 24-01-1985 |
| | | | FR | 2549312 A1 | 18-01-1985 |
| | | | GB | 2146492 A | 17-04-1985 |
| | | | IT | 1175578 B | 01-07-1987 |
| | | | NL | 8402230 A | 01-02-1985 |
| DE 2161599 | A1 | 08-03-1973 | NONE | | |
| DE 29813324 | U1 | 22-10-1998 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. S. L. DOLAN ; P. W. LEHN.** Finite element analysis of a Virtual Air Gap Variable Transformer. *2008 Canadian Conference on Electrical and Computer Engineering, Niagara Falls, ON,* 2008, 000891-000896
- Inductance characterization of high-leakage transformers. **J. G. HAYES ; N. O'DONOVAN ; M. G. EGAN ; T. O'DONNELL.** Eighteenth Annual IEEE Applied Power Electronics Conference and Exposition. APEC '03, 2003, vol. 2, 1150-1156
- **X. MARGUERON ; J. KERADEC.** Design of Equivalent Circuits and Characterization Strategy for n-Input Coupled Inductors. *IEEE Transactions on Industry Applications,* January 2007, vol. 43 (1), 14-22